# EUROPEAN PATENT APPLICATION

(11) **EP 4 397 871 A1**
(43) Date of publication of application: **10.07.2024**
(21) Application number: 23150626.2
(22) Date of filing: 06.01.2023
(51) Int. Cl.: F16C 11/06, B60S 1/24

(54) **A BALL-JOINT ASSEMBLY OF A CRANK AND A CONNECTING ROD OF A WINDSHIELD WIPER MODULE**

(71) Applicant: Valeo Systèmes d'Essuyage, 78322 Le Mesnil Saint Denis (FR)
(72) Inventor: SPIECHA, Antoni, 32 050 Skawina (PL); CHRUPCZALSKI, Karol, 32 050 Skawina (PL); PRUCIAK, Tomasz, 32 050 Skawina (PL)
(74) Representative: Valeo Visibility

(57) **Abstract**

A ball-joint assembly (34, 36, 38) of a crank (30, 32) and a connecting rod (26, 28) of a windshield wiper module, comprising a crankpin (40) fixed to the crank (30, 32) and a ball joint housing comprising a socket (42) configured to receive the crankpin (40), said socket (42) being fixed in an opening (46) disposed at an end of the connecting rod (26, 28), wherein the socket (42) comprises a base portion (50) comprising a shoulder (62) forming a first lateral projection and a central portion (52) configured to receive the crankpin (40), the central portion (52) further comprising snap-fitting means (56) constituted by a plurality of second lateral projections, such that the connecting rod (26, 28) is fixed between the first lateral projection and second lateral projections, the shoulder (62) having at least a radial slot (66) forming locally a zone of reduced thickness (68).

## Description

The present invention relates to the field of the windshield wiper module, and more particularly concerns the ball-joint assembly between components of such modules.

A windshield wiper module comprises a wiper drive unit whose shaft is connected to two linkage subsystems respectively connected to a wiper shaft rotatably supported in a support member. Said support members and a support member of the wiper drive unit are fixed to the frame of the vehicle.

Linkage subsystems extend between the wiper drive unit and the wiper shaft and comprise a connecting rod linked to a first crank fixed to the shaft of the wiper drive unit and a second crank fixed to the wiper shaft, at least one of the connections between the connecting rod and a crank being a ball-joint assembly. Linkage subsystems transfer rotational motion of the shaft of the wiper drive unit into synchronized oscillatory movement of the wiper shafts.

Some of these modules are pre-mounted such that they arrive in one piece on the vehicle production lines, with stiffening bars between the support member for the drive unit and each support member for the wiper shaft. Only support members for the wiper drive unit and the wiper shaft are to attach to the frame of the vehicle. The at least one ball-joint assembly is made in a specific workshop, with an appropriate stamping press that allows a crankpin of the crank to be force-fitted into a cage of the connecting rod.

But simplified systems, without a stiffening bar between the support members, are now designed and their installation on the vehicle, while allowing greater flexibility in the position of the wiper shafts in relation to each other, also implies having to achieve the ball-joint assembly on site, where a stamping press cannot be used.

It is thus sought to design ball-joint assemblies that allow assembly on production lines involving less effort.

According, therefore, to a first aspect, the invention is directed towards a ball-joint assembly of a crank and a connecting rod of a windshield wiper module, comprising a crankpin fixed to the crank and a ball joint housing comprising a socket configured to receive a spherical portion of the crankpin, said socket being fixed in an opening disposed at an end of the connecting rod, wherein the socket comprises a base portion comprising a shoulder forming a first lateral projection and a central portion configured to receive the crankpin, the central portion having snap-fitting means constituted by a plurality of second lateral projections such that the connecting rod is fixed between the first lateral projection and second lateral projections of the socket, the shoulder comprising at least one radial slot forming locally a zone of reduced thickness.

The present invention makes it possible to provide a ball-housing assembly with few components, since only a one-part socket is interposed between the crankpin and the connecting rod. This socket is made in such a way as to allow fixation to one and to the other of the parts which it is to connect by a snap-fitting operation, easy to perform by an operator on a vehicle assembly line and without necessitating the aid of a clamping tool. The socket includes first fastening means which allow the manual fastening of the socket on the crankpin, and second fastening means, formed by the snap-fitting means, which allow the manual fastening of the set formed by the socket and the crankpin on the connecting rod.

The crankpin is inserted into the socket by passing through an entry opening, the size of which will depend on the desired crankpin insertion force and the reliability of the fastening, such that the crankpin is firmly held in the cavity. The first fastening means include the radial slots in the shoulder, which form the zones of reduced thickness, so that the forces required to expand the entry opening are limited and controlled. In this context, it is possible to provide a smaller entry opening, which ensures retention of the crankpin once it is inserted inside the socket and the walls delimiting the entry opening have returned to their original shape.

According to an aspect of the invention, the central portion comprises at least one axial slot, each at least one axial slot constituting an axial extension of a respective one of the snap-fitting means and leading into a respective radial slot of the shoulder.

According to an aspect of the invention, the socket comprises a plurality of radial slots and axial slots.

According to an aspect of the invention, the zone of reduced thickness of the shoulder comprise a bump which extends the periphery of the shoulder radially outward.

According to an aspect of the invention, the radial slot extends along the whole radial dimension of the shoulder such that the zone of reduced thickness of the shoulder is formed by a radial cut.

According to an aspect of the invention, the radial slots are uniformly distributed about the axis of elongation.

According to an aspect of the invention, the socket is substantially cylindrical, the elongation axis being constituted by an axis of revolution of the socket.

According to an aspect of the invention, the socket has a square cross section centered on the elongation axis.

According to an aspect of the invention, the snap-fitting means are disposed on corners of the square cross section of the socket.

According to an aspect of the invention, the top end of the socket forms a ramp to facilitate insertion into the opening of the end of the connecting rod.

According to an aspect of the invention, the second part is made part of a low-friction material.

Preferably, the socket is made of a low-friction plastic.

According to a second aspect, the invention is directed towards a vehicle comprising a windshield wiper module with at least a linkage subsystem comprising a crank, a connecting rod, and a ball-joint assembly according to the preceding.

According to a third aspect, the invention is directed towards a process of assembly of a windshield wiper module as described above, comprising at least:
- a step of mounting the socket around the crankpin by an elastic deformation of the shoulder forming the first lateral projection and having zones of reduced thickness; and
- a step of snapping an end of the connecting rod onto the socket by an elastic deformation of the snap-fitting means forming second lateral projections.

Other characteristics and advantages of the invention will become apparent from the following description of several examples of implementation given by way of indication and not as a limitation with reference to the attached schematic drawings, wherein:
Figure 1 illustrates a windshield wiper module implementing a ball-joint assembly according to the invention;
Figure 2 is a detail view of the module of figure 1, showing an end of a connecting rod and an end of a crank linked by a ball-joint assembly according to the invention;
Figure 3 is a sectional view of the components visible in figure 2;
Figure 4 is a view of the components of figure 2, prior to their assembly, to make visible a socket arranged to be snapped on both with the end of the connecting rod and a crankpin of the crank;
Figure 5 illustrates a first alternative embodiment of the invention; and
Figure 6 illustrates a second alternative embodiment of the invention.

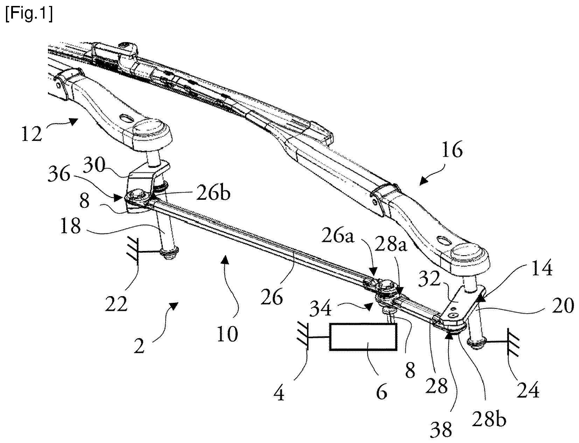

Figure 1 shows a linkage system for actuating windshield wipers of a motor vehicle, called system 2 hereafter. When mounted in a motor vehicle, the system 2 is typically fixed to the frame of the vehicle by brackets here schematically illustrated.

A first bracket 4 supports an electric gear motor 6, schematically illustrated, the output shaft 8 of which is intended to drive a first linkage subsystem 10 for a first windshield wiper 12 and a second linkage subsystem 14 for a second windshield wiper 16, windshield wipers 12, 16 each comprising a wiper arm for actuating a wiper blade.

A longitudinal end of the wiper arm is secured to a drive shaft 18, 20, whose position next to the windshield is fixed by brackets 22, 24, the opposite longitudinal end of the wiper arm being connected to the wiper blade.

Each linkage subsystem 10, 14 extends from the output shaft 8 of the motor 6 to one of the drive shafts 18, 20 and comprises a connecting rod 26, 28 and a crank 30, 32. As illustrated, a first linkage subsystem 10 comprises a first connecting rod 26 and a first crank 30 and a second linkage subsystem 14 comprises a first connecting rod 28 and a second crank 32.

The connecting rods 26, 28 have a substantially rectilinear elongated general shape extending along an elongation axis A between a first longitudinal end 26a, 28a and a second longitudinal end 26b, 28b. The connecting rods are for example made by forging or sheet-metal stamping, and present an embossed central portion and planar longitudinal ends.

The first longitudinal end 26a, 28a of the connecting rod 26, 28 of a linkage subsystem 10, 14 is hinged to the output shaft 8 of the electric gear motor 6 by a first ball-joint assembly 34 and the second longitudinal end 26b, 28b is hinged to a first end of the crank 30, 32 of the said linkage subsystem by a second ball-joint assembly 36, 38.

The second end of the crank 30, 32 is integrally connected in rotation with the drive shaft of the corresponding windshield wiper.

Each ball-joint assembly 34, 36, 38 is made with a ball-joint housing, which comprising fixing means to the connecting rod, and a crankpin fixed to the crank. The crankpin is shaped to be received at least partly in an internal cavity of the ball-joint housing which has corresponding form and dimensions.

More particularly, the crankpin has a spherical portion whose dimensions, i.e., diameter, are equal to corresponding dimensions of the internal cavity of the ball-joint housing.

As previously mentioned, the invention is related to a ball-joint assembly wherein the ball-joint housing is a socket arranged to ensure snap-fitting connection both for the connection to the connecting rod and to the crank.

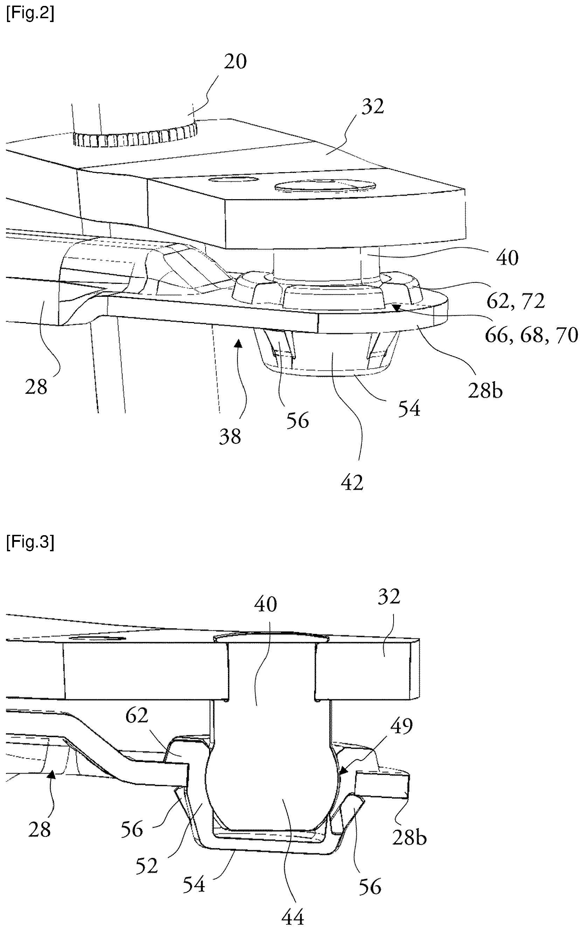

The invention relating to a particular form of a ball-joint assembly will be described more particularly with reference to the ball-joint assembly arranged between the second connecting rod 28 and the second crank 32 of the second linkage subsystem, as illustrated in figure 2, but it should be noted that it could be implemented in a similar manner at every ball-joint assembly of the system 2.

Figure 2 and figure 3 illustrate that the ball-joint assembly comprises a crankpin 40 fixed to the first end of the crank 32 and a socket 42 forming the ball-joint housing as mentioned, with two kinds of snap-fitting means made by lateral projections. The ball-joint assembly allows a rotational movement of the crankpin relative to the socket around three axes.

The socket is made in plastic while both crankpin 40 and end of the connecting rod 28 are metallic.

The crankpin 40 has a spherical portion 44 and the socket 42 is configured to receive the spherical portion of the crankpin 40 and to be fixed to the connecting rod, in an opening 46 of the end of such connecting rod. More specifically, the socket 42 is arranged with a hole forming an internal cavity 49 being suitable for receiving the spherical portion 44 of the crankpin 40. The internal cavity 49 extends along the axial dimension of the socket in a central portion 50 of said socket, extending between a base portion 52 and a summit wall 54.

The connection of the connecting rod 28 and the crank 32 is realized by snapping the socket 42 onto these two components, and more particularly onto the opening of the end of the connecting rod and onto the spherical portion 44 of the crankpin 40. Such an arrangement is advantageous in a context where an operator has to manually complete the connection between the connecting rod 26, 28 and the crank 30, 32 on the vehicle assembly line.

The socket 42 comprises snap-fitting means 56, regularly arranged on the circumference of the socket, in the central portion 52. Snap-fitting means 56 are made by elastic tongues that extend axially along the socket 42 and which form radially first lateral projections. The axis of articulation 58 of these elastic tongues is next to the top wall 54 of the socket. During the insertion of the socket into the opening of the end of the connecting rod, the snap-fitting means are constrained by the edge 60 of the wall delimiting the opening 46 in the connecting rod 28.

The socket 42 also comprises a shoulder 62 forming a second lateral projection at the bottom end of the socket, in the base portion. The axial distance between snap-fitting means 56 and the shoulder 62 is equal to the axial dimension, or thickness, of the end of the connecting rod.

In the assembly process, when the shoulder 62 meets the side of the connecting rod facing the crank, the snap-fitting means 56, here the elastic tongues, are sufficiently beyond the other side of the connecting rod 28 to take their original position and to form another axial abutment allowing the axial fixation of the connecting rod 28.

The socket 42 is made from a material which has low friction and good wear qualities. In particular, engineering plastics such as PTFE, PEEK, POM, polyimide, nylon, and UHMW PE may be preferred. In a possible variant, the socket may be filled with a charge material to improve its wear characteristics, such as a glass or carbon fibers; or filled/impregnated with a lubricant to reduce friction, for instance graphite, molybdenum disulfide, or oil. The skilled person will be capable of determining the optimal composition and configuration for any given implementation of the invention.

As mentioned above, the socket 42 has a base portion 50 next to the crank 30, 32 and a central portion 52. The base portion 50 comprises the shoulder 62 and the central portion 52 comprises the elastic tongues forming the snap-fitting means 56 and the part between the elastic tongues and the shoulder, surrounded by the connecting rod when the windshield wiper module is fixed to the vehicle. Some of the central portion and the top wall 70 extend beyond the connecting rod opposite to the crank when the windshield wiper module is fixed to the vehicle.

The top wall 54 is closed to prevent infiltration of dirt, water and dust. The central portion 52 has a wall 64 between the top wall and the axis of articulation of the snap-fitting means 56 which is inclined in relation to the central portion 52 to form a ramp to facilitate insertion of the socket 42 in the opening of the connecting rod. The snap-fitting means 56 are arranged to be prominent, protruding from the sloped wall of the central portion 52.

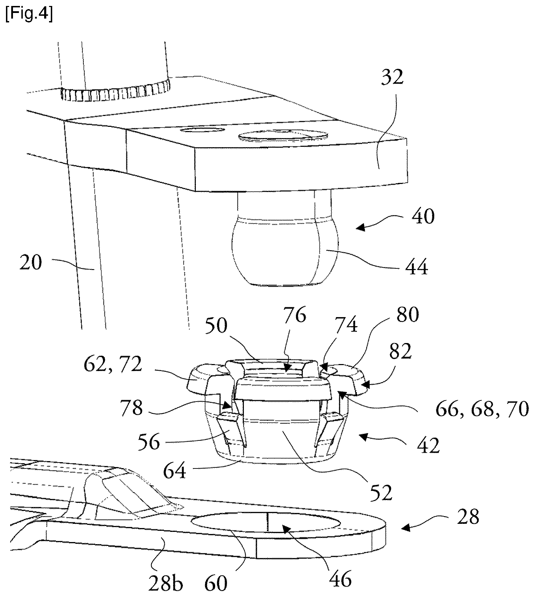

Figure 4 illustrates more clearly the socket 42 of the ball-joint assembly of the invention and its specific base and central portions 50, 52.

The shoulder 62 in the base portion 50 comprises at least a radial slot 66 forming locally a thinning zone 68. Here, the shoulder 62 comprises four radial slots 66 which extend all along the radial dimension of the shoulder to form a radial cut 70. In other words, each thinning zone 68 of the shoulder is here formed by a radial cut 70.

The four radial slots 66 are angularly distributed around the elongation axis. They delimit four segments 72 of the shoulder 62. Each segment 72 of the shoulder is thus more apt to elastically deform when the spherical portion 44 of the crankpin 40 is passed through the base portion 50 to be fitted in the internal cavity of the socket 42.

Each segment 72 of the shoulder has an internal surface 74 facing the internal surfaces of the other segments and these internal surfaces delimit the entry opening 76 of the internal cavity 49 of the socket 42. In the resting position of the shoulder, when no radial force is exerted on the shoulder by the crankpin as illustrated in figure 4, the diameter of such an entry opening 76 is smaller than the diameter of the spherical portion 44 of the crankpin 40.

When the crankpin 40 is inserted in the socket to put the spherical portion 44 in the internal cavity 49, radial forces are exerted on at least one of the segments 72 of the shoulder 62 depending on the initial centering of the spherical portion 44 with respect to the socket 42. Configuring the shoulder 62 as segmented in this manner will facilitate a manual snapping-on by an operator at the time of assembly.

Such an easy assembly is also facilitated by axial slots 78 realized in the central portion 52 of the socket 42 in combination with the local zones of reduced thickness 68.

The axial slots 78 of the central portion 52 are in the same number of the radial slots 66 of the shoulder 62. The axial slots 78 extend respectively in the axial extension of the snap-fitting means 56 and they respectively lead into one of the radial slots 66 of the shoulder 62.

Such axial slots 78 allow the elastic deformation of the snap-fitting means 56 and they delimit four angular portions 80 of the socket each having at a free end a segment 72 of the shoulder. The elasticity of each segment 72 is improved and the snapping step of the assembly process is easier.

As illustrated in figure 4, the ball-joint assembly of a first embodiment comprises a socket 42 made as a cylindrical piece wherein the elongation axis is an axis of revolution of the socket. The segments 72 of the shoulder have a circular internal surface 74 and a circular external surface 92 and the central portion 52 present a circular cross-section, with the exception of the snap-fitting means 56, in a section plane perpendicular to the elongation axis.

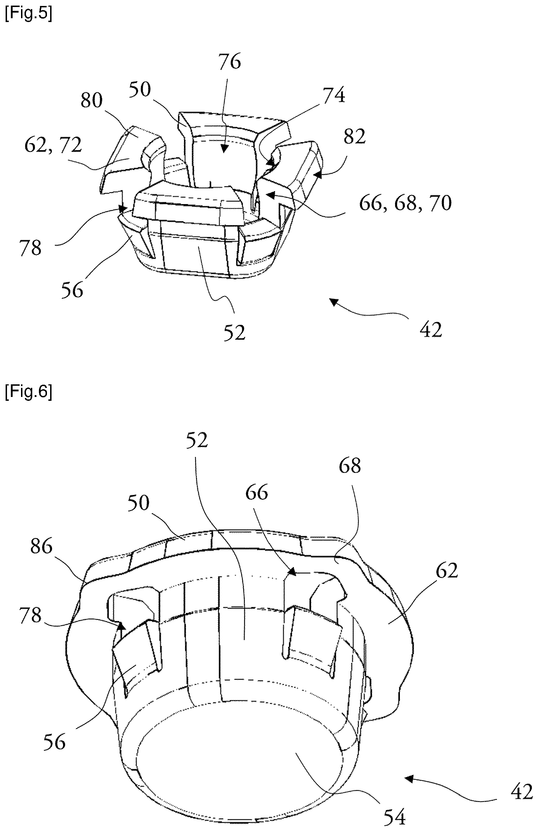

Figure 5 shows another embodiment of the socket, which differs from the first embodiment in that the shape of the outer surface of the central portion 52 is no longer circular but substantially square.

The snap-in means 56 and the axial slots 78 that extend these snap-in means 56 to the shoulder 62 are arranged at each corner 84 of the central portion 52.

The external surface 82 of each segment 72 of the shoulder is straight.

Such a configuration is advantageous to ensure the orientation of the radial cuts in relation with the longitudinal axis of the connecting rod. The forces that are applied to the junction between the connecting rod and the crank are essentially longitudinal and it is more convenient to have a segment of the shoulder perpendicular to this direction, than a radial cut.

The figure 6 shows another embodiment of the socket which differs from the first embodiment in that the zone of reduced thickness of the shoulder is not made by a radial cut extending all along the radial dimension of the shoulder. The radial slots 66 extend only locally on the shoulder 62, from the corresponding axial slot, and do not open onto the peripheral external surface 82 of the shoulder 62.

In accordance with the invention, however, this results in zones of reduced thickness 68 that facilitate the deformation of the shoulder 62 and, in particular, its expansion when the spherical portion of the crankpin is inserted into the internal cavity of the socket.

As illustrated, a bump 86 is made on the shoulder 62 for each radial slot 66. Said bump 86 extends radially the outer periphery of the shoulder 62. The bump 86 is dimensioned to maintain a zone of reduced thickness 68, and is oriented towards the outside of the socket to help the expansion of the shoulder 62 and the socket 42 when the spherical portion 44 of the crankpin 40 is inserted inside the socket 42.

Of course, both variants illustrated in figures 5 and 6 could be combined with radial slots that do not open to the outer surface of the shoulder, and that form a zone of reduced thickness, in each corner of a socket that has a square shape.

It results from the features of the ball-joint assembly, and in particular of the socket, that the assembly process is easier for the operator on the vehicle assembly line. The mounting of the connecting rod 26, 28 and the crank 30, 32 is realized with two steps of snapping, without the need for a clamping tool. The fitting of the socket 42 around the crankpin 40 can thus be easily performed by the operator on the vehicle assembly line, thanks to the expansion of the socket 42 made possible by the zones of reduced thickness 68 in the shoulder 62. Also, the connection of the socket 42 and the connecting rod 26, 28 can be easily performed by the operator, by inserting the socket 42 effortlessly into the opening 46 of the connecting rod, thanks to the sloped surface 64 formed in the socket 42. The snap-fitting means 56 retract inside the socket 42 thanks to the axial slots 78 formed in the central portion 52 and allow the insertion of the socket 42. The operator will know when to stop the insertion, since the shoulder 62 meets the connecting rod 26, 28. In this position, the snap-fitting means 56 are disengaged and they elastically return to their original shape to ensure the axial locking in the other direction.

The invention, as just described, achieves its intended purpose and by providing a ball-joint assembly which is easy to mount by an operator on the assembly line of the vehicle. Of course, the invention is not limited to the examples just described, and many adjustments can be made to these examples without leaving the scope of the invention.

## Claims

1. A ball-joint assembly (34, 36, 38) of a crank (30, 32) and a connecting rod (26, 28) of a windshield wiper module, comprising a crankpin (40) fixed to the crank (30, 32) and a ball joint housing comprising a socket (42) configured to receive a spherical portion (44) of the crankpin (40), said socket (42) being fixed in an opening (46) disposed at an end of the connecting rod (26, 28), wherein the socket (42) comprises a base portion (50) comprising a shoulder (62) forming a first lateral projection and a central portion (52) configured to receive the crankpin (40), the central portion (52) further comprising snap-fitting means (56) constituted by a plurality of second lateral projections, such that the connecting rod (26, 28) is fixed between the first lateral projection and second lateral projections of the socket (42), the shoulder (62) comprising at least one radial slot (66) forming locally a zone (68) of reduced thickness.

2. The ball-joint assembly (34, 36, 38) of claim 1, wherein central portion (52) comprises at least one axial slot (78), each at least one axial slot (78) constituting an axial extension of a respective one of the said snap-fitting means (56) and leading into a respective radial slot (66) of the shoulder (62).

3. The ball-joint assembly (34, 36, 38) of any one of the preceding claims, wherein the socket (42) comprises a plurality of radial slots (66) and axial slots (78).

4. The ball-joint assembly (34, 36, 38) of one of the preceding claims, wherein the zone (68) of reduced thickness of the shoulder (62) comprises a bump (86) which extends the periphery of the shoulder (62) radially outward.

5. The ball-joint assembly (34, 36, 38) of any one of claims 1 to 3, wherein the radial slot (66) extends along the whole radial dimension of the shoulder (62) such that zone (68) of reduced thickness of the shoulder (62) is formed by a radial cut (70).

6. The ball-joint assembly (34, 36, 38) of any one of the preceding claims, wherein the radial slots (66) are uniformly distributed about the axis of elongation.

7. The ball-joint assembly (34, 36, 38) of any one of the preceding claims, wherein the socket (42) is substantially cylindrical, the elongation axis being constituted by an axis of revolution of the socket (42).

8. The ball-joint assembly (34, 36, 38) of one of the claims 1 to 6, wherein the socket (42) has a square cross section centered on the elongation axis.

9. The ball-joint assembly (34, 36, 38) of claim 8, wherein the snap-fitting means (56) are disposed on corners (84) of the square cross section of the socket (42).

10. The ball-joint assembly (34, 36, 38) of any one of the preceding claims, wherein the top end of the socket (42) forms a ramp to facilitate insertion into the opening (46) of the end of the connecting rod (26, 28).

11. The ball-joint assembly (34, 36, 38) of one any of the preceding claims, wherein the socket (42) is made of a low-friction material.

12. The ball-joint assembly (34, 36, 38) of the preceding claim, wherein the socket (42) is made of a low-friction plastic.

13. Vehicle comprising a windshield wiper module with at least a linkage subsystem comprising a crank, a connecting rod, and a ball-joint assembly (34, 36, 38) according to any one of the preceding claims.

14. Process of assembly of a windshield wiper module comprising a ball joint assembly (34, 36, 38) according to any one of the claims 1 to 12, the process comprising at least:
- a step of mounting the socket (42) around the crankpin (40) by an elastic deformation of the shoulder (62) forming the first lateral projection and having zones (68) of reduced thickness; and
- a step of snapping an end of the connecting rod (26, 28) onto the socket (42) by an elastic deformation of the snap-fitting means (56) forming second lateral projections.
